# EUROPÄISCHE PATENTSCHRIFT

(11) **EP 3 360 640 B1**
(45) Veröffentlichungstag und Bekanntmachung des Hinweises auf die Patenterteilung: **26.05.2021**
(21) Anmeldenummer: 17202381.4
(22) Anmeldetag: 17.11.2017
(51) Int. Cl.: B23K 26/402, B23K 26/082, B23K 26/02, B23K 26/362, B23K 26/16, B08B 7/00, B08B 15/04, B60B 3/00, B23K 101/00, B23K 101/34

(54) **VERFAHREN UND STATION ZUR ENTSCHICHTUNG EINES RADS**
METHOD OF AND STATION FOR REMOVING A COATING OF A WHEEL
PROCÉDÉ ET STATION D'ENLÉVEMENT DE REVÊTEMENT D'UNE ROUE

(30) Priorität: 23.11.2016 DE 102016122629
(43) Veröffentlichungstag der Anmeldung: 15.08.2018
(73) Patentinhaber: SLCR Lasertechnik GMBH, 52353 Düren (DE)
(72) Erfinder: Schulz, Olav, 50126 Bergheim (DE)
(74) Vertreter: Paul & Albrecht Patentanwälte PartG mbB

(56) Entgegenhaltungen:
- WO-A1-2016/124656
- DE-A1-102008 009 704
- DE-A1-102012 108 691
- US-A1- 2005 103 763
- US-A1- 2012 121 749

## Beschreibung

Die vorliegende Erfindung betrifft ein Verfahren zum Entschichten einer mit einer Beschichtung versehenen Oberfläche eines mit Schraubenkanälen und mit einer mittig angeordneten Öffnung versehenen Rads innerhalb eines oder mehrerer zu entschichtender Bereiche und eine Entschichtungsstation gemäß dem Oberbegriff der Ansprüche 1 und 11 (siehe z.B. DE 10 2008 009704 A1).

Beschichtete Räder sind im Stand der Technik in unterschiedlichsten Ausgestaltungen bekannt, beispielsweise in Form von lackierten Leichtmetallrädern. Nach Vorgabe der Automobilhersteller müssen die sich um die jeweiligen Schraubenkanäle solcher Räder ringförmig erstreckenden Funktionsflächen, die auch als Kalotten bezeichnet werden und später jeweils als Anlagefläche für den Kopf einer Befestigungsschraube dienen, frei von Lacken sein, um die Befestigungsschrauben bei der Montage mit einem einheitlichen Drehmoment anziehen zu können. Eine Lackschicht im Bereich dieser Funktionsflächen würde dazu führen, dass sich das vorbestimmte Drehmoment beim Festziehen der Befestigungsschrauben aufgrund des eingeschlossenen Lacks verändert, wodurch ein versehentliches Lösen der Befestigungsschrauben bei standardisierter Montage der Räder begünstigt wird. Ferner wird auch eine lackfreie Oberfläche um die mittige Öffnung gefordert, die auch als Nabe bezeichnet wird.

Zur Erzielung lackfreier Funktionsflächen ist es bekannt, die entsprechenden Funktionsflächen bereits vor dem Beschichten zu maskieren, wozu meist Kugeln oder Stopfen eingesetzt werden. Derartige Maskierungen führen aber häufig nicht zu einem einheitlichen Arbeitsergebnis, was mit Problemen bei der Qualitätssicherung einhergeht. Darüber hinaus erfordert das Maskieren einen zusätzlichen Arbeitsschritt, was zu hohen Kosten führt.

Eine weitere Möglichkeit zur Erzielung lackfreier Funktionsflächen besteht darin, die beschichteten Oberflächen der Räder nachträglich im Bereich der Funktionsflächen zu entschichten. Hierbei ist insbesondere die Erzielung der seitens der Automobilhersteller geforderten Entschichtungsgenauigkeit problematisch, insbesondere die Ausbildung einer exakten äußeren Begrenzung der entschichteten Bereiche.

Seitens der vorliegenden Anmelderin wird seit dem Jahre 2008 in diesem Zusammenhang eine Beschichtungsanlage angeboten, die speziell für die Kalottenentschichtung ausgelegt ist. Das Entschichten erfolgt unter Verwendung eines gepulsten CO₂-Laserstrahls mit einer Pulsdauer von etwa 2 µs und einer Pulsleistung von mehr als 6J, wobei die Strahlführung über Umlenk- und Fokussierspiegel realisiert wird. Hierdurch entsteht ein ovaler bis rechteckiger Bearbeitungsfleck mit einer Fläche von etwa 1 cm². Bedingt durch die Größe des Bearbeitungsflecks und die seitens der Automobilhersteller geforderten Genauigkeiten des Entschichtens ist allerdings auch bei diesem Verfahren eine Maskierung erforderlich. Diese Maskierung wird durch die Verwendung eines den Laserstrahl formenden, rohrförmig ausgebildeten Strahltubus realisiert, der während des Entschichtens unmittelbar auf die zu entschichtenden Bereiche aufgesetzt wird. Die Führung des Laserstrahls durch den Strahltubus erfolgt über ein Vierachssystem (X-, Y-, Z- und R-Achse), wobei alle Strahlführungs- und Strahlformungsoptiken montiert und ausgerichtet sind, um den Laserstrahl durch den Strahltubus in der erforderlichen Weise auf den zu entschichtenden Bereich zu applizieren. Während des Entschichtens entstehende Dämpfe und Partikel werden entfernt, indem der Strahltubus unter Druck gesetzt wird, so dass Dämpfe und abgetragenes Material durch den entsprechenden Schraubenkanal ausgeblasen werden. Unterhalb der Radaufnahme bzw. des sich durch die Entschichtungsanlage erstreckenden Förderwegs ist eine Absaugeinrichtung positioniert, welche die unkontrolliert durch den jeweiligen Schraubenkanal ausgeblasenen Dämpfe und Partikel absaugt. Um die genaue Position der zu entschichtenden Bereiche zu ermitteln, verfügt die Entschichtungsanlage über ein Kamerasystem, das die genaue Position der Schraubenkanäle und damit der zu entschichtenden Bereiche erfasst. Die Bearbeitungszeit ergibt sich grundsätzlich aus der Anzahl der zu entschichtenden Bereiche pro Rad und der Schichtdicke des Lacks. Sie ist durch Schaltvorgänge und verfügbare Laserleistung bisher auf ca. 250 Räder pro Stunde beschränkt.

Ein Nachteil der zuvor beschriebenen Beschichtungsanlage besteht darin, dass die Maskierung der zu entschichtenden Bereiche über den Strahltubus mit mehreren Problemen einhergeht. Zum einen muss gewährleistet werden, dass der Strahltubus dicht auf die Oberfläche des zu entschichtenden Rades aufsetzt, um innerhalb des Strahltubus den zum Ausblasen der Gase und Partikel erforderlichen Überdruck erzeugen zu können. Eine derartige Dichtung ist jedoch stets störanfällig. Zum anderen wirkt sich die Tatsache, dass der Strahltubus auf jeden einzelnen der zu entschichtenden Bereiche aufgesetzt werden muss, aber auch negativ auf die erzielbare Taktzeit aus. Ähnliches ergibt sich aus der Tatsache, dass der Strahltubus beim Wechsel der zu bearbeitenden Räder bzw. der Kalottenform ausgetauscht werden muss, was entsprechende Umrüstzeiten nach sich zieht. Ferner führt das Aufsetzen des Strahltubus oft zu mechanischen Defekten am vorhandenen Lack entlang der Kontaktlinie, was Qualitätseinbußen zur Folge hat.

Ein nachträgliches Entschichten der Funktionsflächen durch mechanische Bearbeitung, wie beispielsweise unter Verwendung eines Senkers oder dergleichen, scheidet aufgrund anderer Vorgaben der Automobilindustrie aus. Ausgehend von diesem Stand der Technik ist es eine Aufgabe der vorliegenden Erfindung, ein Entschichtungsverfahren der eingangs genannten Art zu schaffen, mit dem eine mit einer Beschichtung versehene Oberfläche eines mit Schraubenkanälen und einer Öffnung versehenen Rads innerhalb eines oder mehrerer zu entschichtender Bereiche, die sich jeweils ringförmig, insbesondere kreisringförmig um einen der Schraubenkanäle und/oder um die Öffnung erstrecken, preiswert, schnell, einfach und mit hoher Bearbeitungsgenauigkeit entschichtet werden kann.

Zur Lösung dieser Aufgabe schafft die vorliegende Erfindung ein Verfahren nach Anspruch 1. Mit anderen Worten zeichnet sich das erfindungsgemäße Verfahren dadurch aus, dass während des Entschichtens gänzlich auf jegliche Maskierungen verzichtet wird. So kann insbesondere auf den Einsatz eines Strahltubus verzichtet werden. Entsprechend kann das erfindungsgemäße Verfahren vergleichsweise preiswert, schnell und einfach durchgeführt werden. Zur direkten Absaugung weist die verwendete Entschichtungsanlage eine Absaugeinrichtung auf, deren Ansaugöffnung unmittelbar unterhalb des entsprechenden Schraubenkanals positioniert ist. Eine derartige direkte Absaugung ist dahingehend von Vorteil, dass auf die Erzeugung eines Überdrucks verzichtet werden kann, was sich zudem positiv auf die Kosten der Entschichtungsanlage auswirkt.

Zur Erzielung einer hohen Bearbeitungsgenauigkeit ist es vorteilhaft, den Laserstrahl über eine insbesondere verfahrbare Scanner-Einrichtung über den oder die zu entschichtenden Bereiche der Oberfläche zu bewegen. Eine derartige Scanner-Einrichtung hat gegenüber anderen Strahlführungs- und Strahlformungsoptiken den Vorteil, dass sich Verarbeitungsflecke mit beliebiger Fläche erzielen lassen, wodurch die erzielbare Flexibilität ebenso wie die Entschichtungsgenauigkeit wesentlich verbessert werden.

Vorteilhaft wird als Laserquelle ein CO₂-Laser verwendet, wobei der erzeugte Laserstrahl bevorzugt im Wellenlängenbereich von 9 bis 11 µm liegt und/oder wobei die Laserquelle insbesondere im cw-Modus betrieben wird.

Alternativ kann als Laserquelle ein Faserlaser oder ein Nd:Yag-Laser im cw-Modus oder im gepulsten Modus verwendet werden, wobei der erzeugte Laserstrahl insbesondere im Wellenlängenbereich von 1 bis 1,1 µm liegt, auch wenn die Verwendung eines CO₂-Lasers vorliegend bevorzugt wird.

Gemäß einer Ausgestaltung des erfindungsgemäßen Verfahrens wird das Rad in einem ersten Schritt fixiert. Die Fixierung kann beispielsweise über Fixierelemente erfolgen, die entlang einer sich durch die Entschichtungsanlage erstreckenden Förderstrecke angeordnet sind. Die Fixierung erfolgt vorteilhaft nicht nur in horizontaler sondern auch in vertikaler Richtung, so dass das zu bearbeitende Rad während des Entschichtens in einer fest definierten, bevorzugt zentrierten Position gehalten wird. In einem weiteren Schritt werden die Positionen der Schraubenkanäle und der Öffnung des Rades automatisch erfasst, bevorzugt unter Verwendung eines geeignet ausgestalteten Kamerasystems. So kann beispielsweise unterhalb der Förderstrecke bzw. Werkstückauflage eine Lichtquelle angeordnet sein, die das zu entschichtende Rad von unten durch eine in der Förderstrecke bzw. Werkstückauflage vorgesehene Öffnung zumindest im Bereich der Schraubenkanäle ausleuchtet. Oberhalb des Rades ist eine transparente, bevorzugt mattierte Scheibe angeordnet, auf der das durch die Schraubenkanäle hindurchtretende Licht in Form von Kreisen abgebildet wird. Die Positionen der Kreise können dann von einer oberhalb der Scheibe angeordneten Kamera erfasst werden. In einem darauffolgenden Schritt werden der oder die zu entschichtenden Bereiche basierend auf den erfassten Positionen der Schraubenkanäle automatisch definiert, insbesondere berechnet, woraufhin der Laserstrahl entsprechend bewegt wird.

Bevorzugt wird der Laserstrahl spiralförmig über die einzelnen zu entschichtenden Bereiche bewegt, insbesondere ausgehend von der Außenseite in Richtung der Schraubenkanäle unter Auslassung derselben. Auf diese Weise können insbesondere die äußeren Grenzen der zu entschichtenden Bereiche mit höchster Bearbeitungsgenauigkeit entschichtet werden.

Gemäß einer Ausgestaltung des erfindungsgemäßen Verfahrens sind zumindest zwei Entschichtungsstationen zur Durchführung des Verfahrens vorgesehen, die sich eine einzelne Laserquelle teilen. Mit anderen Worten wird der von der einzelnen Laserquelle erzeugte Laserstrahl wahlweise zur ersten oder zur zweiten Entschichtungsanlage gelenkt. Dies hat den Vorteil, dass die Kosten der Entschichtungsstationen erheblich reduziert werden können.

Erfindungsgemäß kann zusätzlich eine Innenwandung zumindest eines Schraubenkanals entschichtet werden. Bevorzugt wird der Laserstrahl dabei von einem innerhalb des Schraubenkanals angeordneten rotierenden Spiegel auf die zu entschichtende Innenwandung gerichtet.

Ferner schafft die vorliegende Erfindung eine Entschichtungsstation nach Anspruch 11, die zum Entschichten einer mit einer Beschichtung versehenen Oberfläche eines mit Schraubenkanälen und mit einer mittig angeordneten Öffnung versehenen Rads innerhalb eines oder mehrerer zu entschichtender Bereiche eingerichtet ist, die sich ringförmig, insbesondere kreisringförmig um einen der Schraubenkanäle und/oder um die Öffnung erstrecken, wobei die Laserstation Positioniermittel, die zur Positionierung des Rads während des Entschichtens ausgelegt sind, eine Absaugeinrichtung, die derart ausgelegt ist, dass sie bzw. ihre Ansaugöffnung ausgehend von einer Grundstellung in einer Z-Richtung rückseitig unmittelbar benachbart zu einer Radschüssel des durch die Positioniermittel gehaltenen Rads positionierbar sowie in X- und Y-Richtung bewegbar ist, um die Absaugeinrichtung bzw. ihre Ansaugöffnung direkt unterhalb des jeweiligen Schraubenkanals oder der mittigen Öffnung anordnen zu können, eine Laserquelle, insbesondere in Form eines CO2-Lasers, und eine Scanner-Einrichtung aufweist, über die ein von der Laserquelle generierter Laserstrahl auf einen zu entschichtenden Bereich gerichtet wird, wobei sich an die Scanner-Einrichtung kein Strahltubus anschließt.

Gemäß einer Ausgestaltung der vorliegenden Erfindung umfasst die Entschichtungsstation eine Strahlumlenkeinrichtung, die derart ausgebildet ist und an der Scanner-Einrichtung angeordnet werden kann, dass der von der Scanner-Einrichtung ausgesendete Laserstrahl in einem um eine feste Drehachse rotierenden Winkel abgelenkt wird, wobei der Winkel insbesondere im Bereich zwischen 80 und 100° liegt und bevorzugt 90° beträgt. Dank einer solchen Strahlumlenkeinrichtung lassen sich auch Bereiche innerhalb der Schraubenkanäle und/oder der mittigen Öffnung des Rads problemlos entschichten.

Bevorzugt weist die Strahlumlenkeinrichtung einen Spiegel auf, der an einem freien Ende eines Rohrs befestigt ist, das über eine Antriebseinheit drehend um seine Rohrachse antreibbar ist. Wird der aus der Scanner-Einrichtung austretende Laserstrahl durch das Rohr auf den Spiegel gerichtet, so wird er dem Anstellwinkel des Spiegels entsprechend abgelenkt. Aufgrund der Tatsache, dass der Spiegel zusammen mit dem Rohr um die Rohrachse rotiert, rotiert auch der Laserstrahl, so dass, wenn der Spiegel innerhalb eines Schraubenkanals oder innerhalb der mittigen Öffnung des Rads positioniert wird, eine umfängliche Linienentlackung stattfindet. Wird der Spiegel ferner entlang der Achse des Schraubenkanals bzw. der mittigen Öffnung bewegt, so findet eine vollflächige Entlackung der Innenwandung der Durchgangsbohrung statt.

Weitere Merkmale und Vorteile der vorliegenden Erfindung werden anhand der nachfolgenden Beschreibung einer Ausführungsform eines erfindungsgemäßen Verfahrens unter Bezugnahme auf die Zeichnung deutlich. Darin ist.
- Figur 1: eine schematische Ansicht eines beispielhaften Rads, das unter Verwendung eines Entschichtungsverfahrens gemäß einer Ausführungsform der vorliegenden Erfindung bearbeitet werden kann;
- Figur 2: eine schematische Vorderansicht einer Entschichtungsstation, die zur Durchführung eines Entschichtungsverfahrens gemäß einer Ausführungsform der vorliegenden Erfindung verwendet werden kann;
- Figur 3: eine Seitenansicht der in Figur 2 dargestellten Entschichtungsstation;
- Figur 4: eine detailliertere Vorderansicht einer möglichen Ausgestaltung der in den Figuren 2 und 3 dargestellten Entschichtungsstation;
- Figur 5: eine Seitenansicht der in Figur 4 dargestellten Entschichtungsstation;
- Figur 6: eine Vorderansicht von drei Entschichtungsstationen der in den Figuren 4 und 5 dargestellten Art, die sich eine einzelne Laserquelle teilen und
- Figur 7: eine schematische Seitenansicht einer modifizierten Entschichtungsstation gemäß der vorliegenden Erfindung.

Gleiche Bezugsziffern beziehen sich nachfolgend auf gleiche oder gleichartig ausgebildete Bauteile.

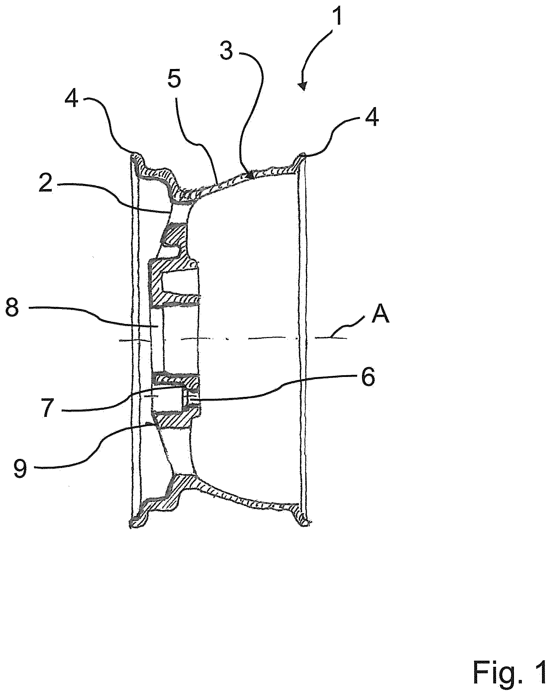

Figur 1 zeigt ein Rad 1, bei dem es sich vorliegend um ein einteilig ausgebildetes Leichtmetallrad handelt, das eine Radschüssel 2 und eine Felge 3 aufweist, auf deren seitlich durch Felgenhörner 4 begrenzten Felgenbett 5 ein Reifen aufgezogen werden kann. Die Radschüssel 2 ist mit mehreren Schraubenkanälen 6 versehen, die sich entlang einer Kreislinie um die Radachse A erstrecken. Jeder Schraubenkanal 6 wird außen durch eine Funktionsfläche 7 begrenzt, welche die Anlagefläche für den Kopf einer Befestigungsschraube bildet. In der Mitte des Rads 1 ist eine Öffnung 8 zur Aufnahme einer Achsmutter angeordnet. Es sollte klar sein, dass es sich bei dem Rad 1 nicht um ein Leichtmetallrad handeln muss. Ebenso kann das Rad 1 beispielsweise auch aus Stahl hergestellt sein. Darüber hinaus kann das Rad 1 auch aus mehreren Bestandteilen bestehen, die miteinander verbunden sind. Eine einteilige Ausbildung ist also nicht erforderlich.

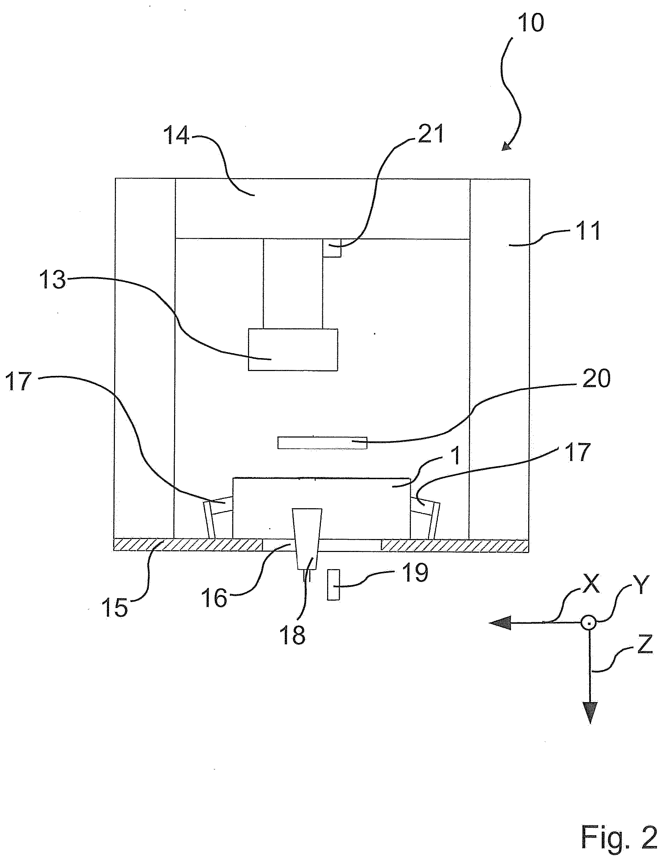

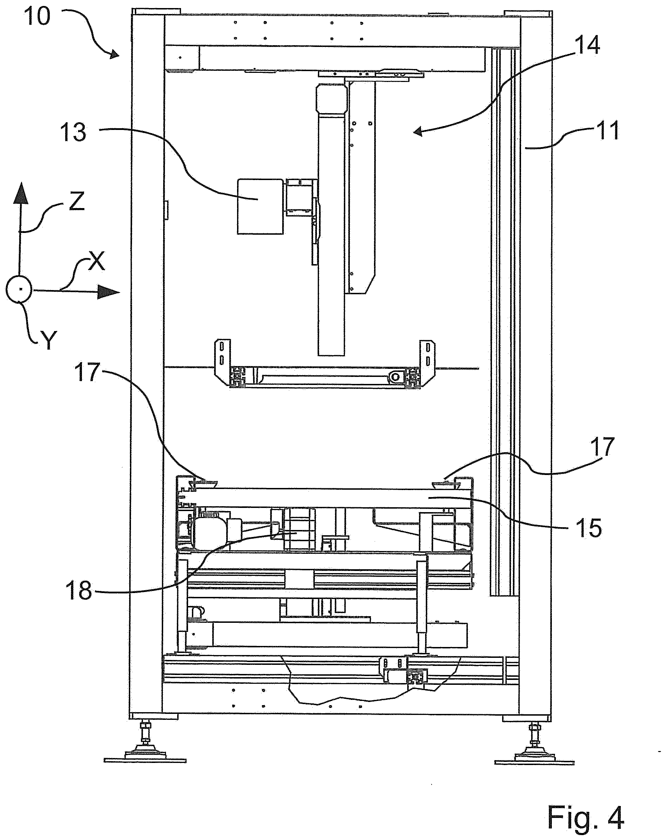

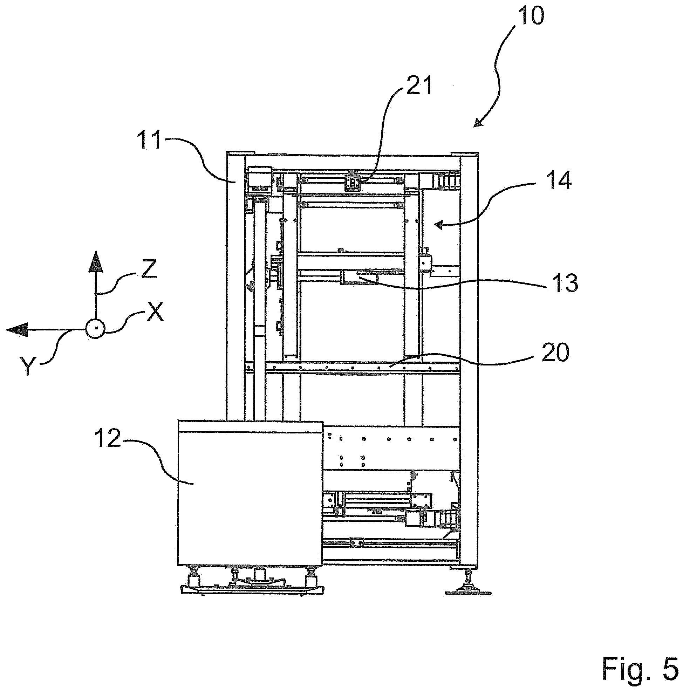

Die äußere Oberfläche zumindest des Felgenhorns 4 ist vorliegend mit einer Beschichtung 9 versehen, die beispielsweise durch einen Lack gebildet wird. Wie es im einleitenden Teil der vorliegenden Anmeldung bereits beschrieben wurde, müssen die Funktionsflächen 7, die sich jeweils ring- bzw. kreisringförmig um die einzelnen Schraubenkanäle 6 und ggf. um die Öffnung 8 erstrecken, nach Vorgabe der Automobilhersteller lackfrei ausgebildet sein. Nachfolgend werden unter Bezugnahme auf die Figuren 2 bis 5 ein Verfahren gemäß einer Ausführungsform der vorliegenden Erfindung, mit dem die Beschichtung 9 im Bereich der Funktionsflächen (Kalotten und im Bereich der Öffnung 8) bzw. im Bereich der zu entschichtenden Bereiche 7 entfernt wird, sowie eine zur Durchführung des Verfahrens verwendete Entschichtungsstation 10 beschrieben.

Die in den Figuren 2 bis 5 dargestellte Entschichtungsstation 10 umfasst als Hauptbestandteile ein Gestell 11, eine Laserquelle 12, eine Scanner-Einrichtung 13, eine Verfahreinheit 14, eine sich durch die Entschichtungsstation 10 hindurch erstreckende Fördereinrichtung 15, die mit einer Aussparung 16 versehen ist, Positioniermittel 17, eine Absaugeinrichtung 18 und ein Kamerasystem mit einer Lichtquelle 19, einer Scheibe 20 und einer Kamera 21.

Das Gestell 11 ist im Wesentlichen rahmenartig ausgebildet und hat die Form eines aufrecht stehenden Quaders, durch den sich im unteren Drittel die Fördereinrichtung 15 im Wesentlichen horizontal in einer Y-Richtung erstreckt. Es sollte allerdings klar sein, dass das Gestell 11 grundsätzlich auch einen anderen Aufbau aufweisen kann.

Bei der Laserquelle 12 handelt es sich vorliegend um einen CO₂-Laser, der einen Laserstrahl im Wellenbereich von 9 bis 11 µm bei einer Leistung von ca. 500 bis 2000 W im cw-Modus erzeugt und über nicht näher dargestellte Umlenkspiegel zur Scanner-Einrichtung 13 leitet.

Die Verfahreinheit 14, die im oberen Bereich des Gestells 11 angeordnet ist, ermöglicht eine Bewegung der an dieser befestigten Scanner-Einrichtung 13 in X-, Y- und Z-Richtung sowie eine Drehung derselben um die Z-Achse. Die Scanner-Einrichtung 13 richtet den Laserstrahl abwärts in Richtung der Aussparung 16, die unterhalb der Scanner-Einrichtung 13 in der Fördereinrichtung 15 ausgebildet ist und im Wesentlichen den Bearbeitungsbereich definiert, innerhalb dessen ein Entschichten durchgeführt werden kann. Die Fördereinrichtung 15 selbst kann beispielsweise durch drehend angetriebene Stäbe gebildet werden, die sich in Y-Richtung in gleichmäßigen Abständen benachbart zueinander angeordnet sind und sich jeweils in X-Richtung erstrecken.

Die Positioniermittel 17 sind im Bereich der Aussparung 16 entlang der Fördereinrichtung 15 vorgesehen und derart ausgelegt, dass sie ein in Y-Richtung von der Fördereinrichtung 15 transportiertes Rad 1 oberhalb der Aussparung 16 und unterhalb der Scanner-Einrichtung 13 anhalten und zentriert fixieren. Derartige Positioniermittel 17 sind aus der Fördertechnik hinlänglich bekannt, weshalb diese vorliegend nicht im Detail beschrieben werden.

Die Absaugeinrichtung 18 kann ausgehend von einer Grundstellung unterhalb der Fördereinrichtung 15 durch die Aussparung 16 in Z-Richtung derart aufwärts verfahren werden, dass sie rückseitig unmittelbar benachbart zur Radschüssel 2 des durch die Positioniermittel 17 gehaltenen Rads 1 positioniert werden kann. Ferner ist ein Bewegen der Absaugeinrichtung 18 in X- und Y-Richtung möglich, um die Absaugeinrichtung 7 bzw. deren Ansaugöffnung direkt unterhalb der jeweiligen Schraubenkanäle 6 des Rads 1 anordnen zu können.

Die Lichtquelle 19 des Kamerasystems ist ebenfalls unterhalb der Aussparung 16 der Fördereinrichtung 15 angeordnet, wobei die Lichtquelle 19 die Innenseite der Radschüssel 2 des von den Positionsmitteln 17 gehaltenen Rads 1 ausleuchtet. Zwischen den Positioniermitteln 17 und der Scanner-Einrichtung 13 ist die transparent und mattiert ausgebildete Scheibe 20 gehalten und derart in Y-Richtung vor- und zurück bewegbar, dass die Scheibe 20 wahlweise zwischen dem durch die Positioniermittel 17 fixierten Rad 1 und der Scanner-Einrichtung 13 angeordnet werden kann. Oberhalb der Scheibe 20 ist wiederum eine Kamera 21 angeordnet, die in Richtung der Aussparung 16 weist.

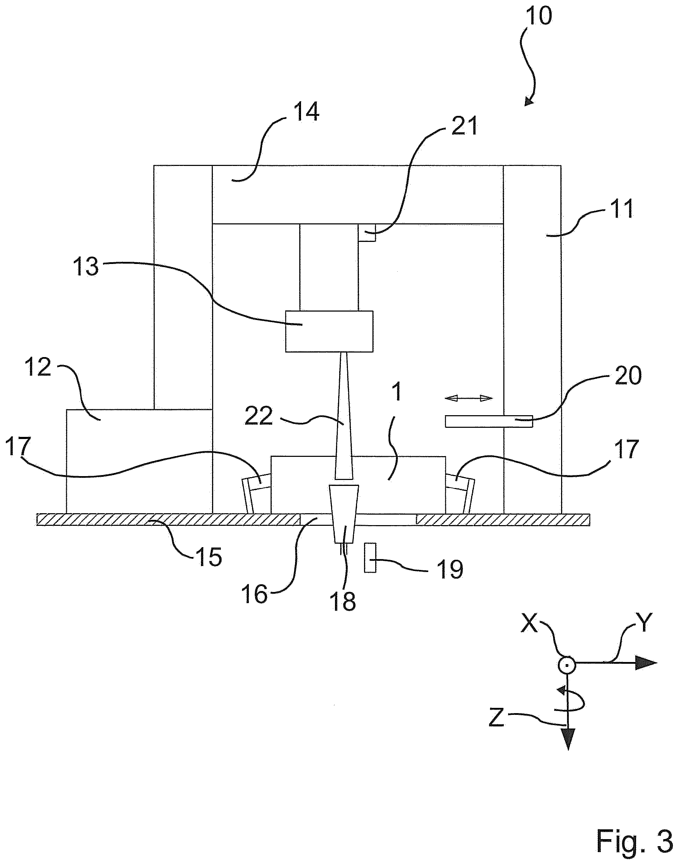

Zum Entschichten zu entschichtenden Bereiche bzw. der Funktionsflächen 7 eines Rades 1 wird das auf der Fördereinrichtung 15 angeordnete Rad 1 in die Beschichtungsanlage 9 bewegt, oberhalb der in der Fördereinrichtung 15 vorgesehenen Aussparung 16 angehalten und unter Einsatz der Positioniermittel 17 zentriert und fixiert. Zur Erfassung der Position der Schraubenkanäle 6 und damit der zu entschichtenden Funktionsflächen 7 des Rads 1 wird in einem weiteren Schritt, wie es in Figur 2 gezeigt ist, die Scheibe 20 oberhalb des Rads 1 positioniert, woraufhin die Lichtquelle 19 die Rückseite des Felgenhorns 4 durch die Aussparung 16 der Fördereinrichtung 15 von unten derart ausleuchtet, dass das durch die Schraubenkanäle 6 hindurchtretende Licht entsprechende Lichtkreise auf der Scheibe 20 abbildet. Die genauen Positionen dieser Lichtkreise werden von der Kamera 21 erfasst, woraufhin die Positionen der Funktionsflächen 7 berechnet und an die Steuerung übermittelt werden. In einem weiteren Schritt wird die Scheibe 20 dann derart in Y-Richtung verfahren, dass sie gemäß Figur 3 außerhalb des Bearbeitungsbereiches angeordnet ist. Daraufhin wird die Absaugeinrichtung 18 aufwärts in Z-Richtung bewegt und unterhalb eines Schraubenkanals 6 positioniert, der von der im nächsten Schritt zu entschichtenden Funktionsfläche 7 umgeben ist. Anschließend wird der von der Laserquelle 12 generierte Laserstrahl 22 über die Scanner-Einrichtung 13 auf die entsprechende Funktionsfläche 7 gerichtet, wobei der Laserstrahl spiralförmig über die Funktionsfläche 7 bewegt wird und die auf dieser befindliche Beschichtung 9 abträgt, und zwar bevorzugt beginnend von außen in Richtung des Schraubenkanals 6 unter Auslassung desselben. Die während des Entschichtens entstehenden Gase und Partikel werden von der Absaugeinrichtung 18 durch den entsprechenden Schraubenkanal 6 abgesaugt. Nach dem Entschichten der ersten Funktionsfläche 7 werden gemäß der Erfindung die weiteren Funktionsflächen 7 des Rads 1 in entsprechender Weise bearbeitet. Nach dem Entschichten sämtlicher Funktionsflächen 7 geben die Positionsmittel 17 das Rad 1 wieder frei, so dass dieses über die Fördereinrichtung 15 in Y-Richtung aus der Entschichtungsstation 10 bewegt wird.

Das zuvor beschriebene Entschichtungsverfahren zeichnet sich insbesondere dadurch aus, dass ein Maskieren der zu entschichtenden Bereiche des Rads 1 nicht erforderlich ist. Dies zieht einen einfachen Aufbau der Entschichtungsstation 10 nach sich. Ferner können sehr kurze Taktzeiten realisiert werden.

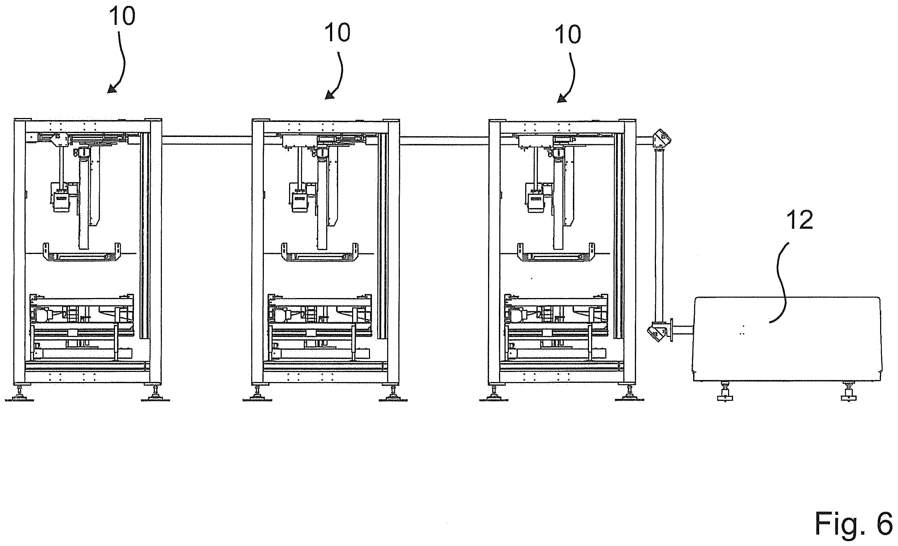

Figur 6 zeigt mehrere, vorliegend drei parallel angeordnete Beschichtungsstationen 10, die sich gemeinsam eine einzelne Laserquelle 12 teilen. Mit anderen Worten kann der von der Laserquelle 12 erzeugte Laserstrahl wahlweise zu einer der Scanner-Einrichtungen 13 der drei Entschichtungsstationen 10 geleitet werden. Entsprechend können zwei Entschichtungsstationen 10 mit neuen Werkstücken bzw. Rädern 1 bestückt werden, während in der dritten Entschichtungsstation 10 ein Rad 1 entschichtet wird. Auf diese Weise lassen sich Kosten sowie Taktzeiten weiter reduzieren.

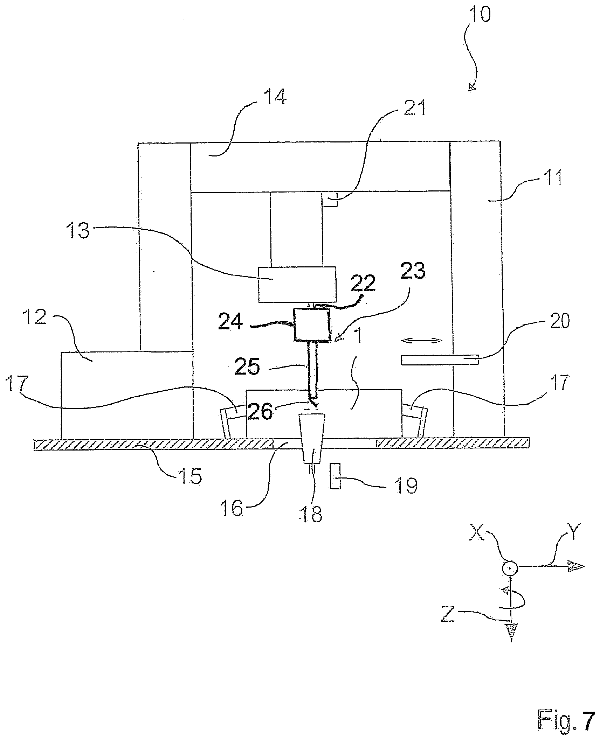

Figur 7 zeigt eine Entschichtungsstation 10 analog zu den Figuren 2 bis 5, die dahingehend modifiziert ist, dass an der Scanner-Einrichtung 13 eine Strahlumlenkeinrichtung 23 montiert ist, die eine Antriebseinheit 24, ein von der Antriebseinheit 24 drehend um seine Rohrachse antreibbares Rohr 25 und einen am freien Ende des Rohr 25 befestigten Spiegel 26 aufweist, der vorliegend in einem Winkel von 45° zur Rohrachse angestellt ist, so dass ein ausgehend von der Scanner-Einrichtung 13 durch das Rohr 25 geleitete Laserstrahl 22 in einem Winkel von 90° abgelenkt wird. Die Abmessungen des Rohrs 25 und des Spiegels 26 sind derart gewählt, dass das Rohr 25 zusammen mit dem an diesem gehaltenen Spiegel 26 von oben in die Schraubenkanäle 6 eingeführt werden kann, indem die Verfahreinheit 14 entsprechend bewegt wird. Werden Rohr 25 und Spiegel 26 im in einen Schraubenkanal 6 eingeführten Zustand um die Rohrachse rotiert und von der Verfahreinheit 14 zusätzlich in Z-Richtung bewegt, erfolgt ein Entschichten der Innenwandung des Schraubenkanals 6.

Es sollte klar sein, dass das zuvor beschriebene Ausführungsbeispiel nicht als einschränkend anzusehen ist. Vielmehr sind Modifikationen möglich, ohne den Schutzbereich der vorliegenden Erfindung zu verlassen, der durch die beiliegenden Ansprüche definiert ist.

## Patentansprüche

1. Verfahren zum Entschichten einer mit einer Beschichtung (9) versehenen Oberfläche eines mit Schraubenkanälen (6) und mit einer mittig angeordneten Öffnung (8) versehenen Rads (1) innerhalb mehrerer zu entschichtender Bereiche (7), die sich ringförmig, insbesondere kreisringförmig um einen der Schraubenkanäle (6) und/oder um die mittige Öffnung (8) erstrecken, wobei das Verfahren unter Verwendung eines von einer Laserquelle (12) erzeugten Laserstrahls (22) durchgeführt wird,
**dadurch gekennzeichnet, dass** das Verfahren folgende Schritte aufweist:
a) Positionieren einer Ansaugsöffnung einer Absaugeinrichtung (18) aufwärts in Z-Richtung und unterhalb desjenigen Schraubenkanals (6) oder der mittigen Öffnung (8), der oder die von dem im nächsten Schritt zu entschichtenden Bereich (7) umgeben ist,
b) Entschichten des zu entschichtenden Bereichs (7), indem der Laserstrahl über den zu entschichtenden Bereich (7) bewegt wird, ohne den zu entschichtenden Bereich (7) durch zusätzliche Mittel zu begrenzen, wobei während des Entschichtens entstehende Gase und Partikel durch denjenigen Schraubenkanal (6) oder durch die mittige Öffnung (8) direkt abgesaugt werden, unterhalb dem oder unterhalb der die Ansaugöffnung in Schritt a) positioniert wurde, und
c) Wiederholen der Schritte a) und b) zum Entschichten jedes weiteren zu entschichtenden Bereichs.

2. Verfahren nach Anspruch 1, **dadurch gekennzeichnet, dass** der Laserstrahl über eine insbesondere verfahrbare Scanner-Einrichtung (13) über den oder die zu entschichtenden Bereiche (7) der Oberfläche bewegt wird.

3. Verfahren nach einem der vorhergehenden Ansprüche, **dadurch gekennzeichnet, dass** als Laserquelle (12) ein CO₂-Laser verwendet wird, wobei der erzeugte Laserstrahl insbesondere im Wellenlängenbereich von 9 bis 11 µm liegt.

4. Verfahren nach Anspruch 3, **dadurch gekennzeichnet, dass** der CO₂-Laser im cw-Modus betrieben wird.

5. Verfahren nach Anspruch 1 oder 2, **dadurch gekennzeichnet, dass** als Laserquelle (12) ein Faserlaser oder ein Nd:Yag-Laser im cw-Modus oder im gepulsten Modus verwendet wird, wobei der erzeugte Laserstrahl insbesondere im Wellenlängenbereich von 1 bis 1,1 µm liegt.

6. Verfahren nach einem der vorhergehenden Ansprüche, **dadurch gekennzeichnet, dass** das Rad (1) fixiert wird, die Positionen seiner Schraubenkanäle (6) und/oder seiner Öffnung automatisch erfasst werden, der oder die zu entschichtenden Bereiche (7) basierend auf den erfassten Positionen automatisch definiert werden und der Laserstrahl entsprechend bewegt wird, wobei die Fixierung des Rads (1) insbesondere unter Herbeiführung einer Zentrierung desselben erfolgt.

7. Verfahren nach einem der vorhergehenden Ansprüche, **dadurch gekennzeichnet, dass** der Laserstrahl spiralförmig über den oder die zu entschichtenden Bereiche (7) bewegt wird.

8. Verfahren nach einem der vorhergehenden Ansprüche, **dadurch gekennzeichnet, dass** zumindest zwei Entschichtungsstationen (10) zur Durchführung des Verfahrens vorgesehen sind, die sich eine einzelne Laserquelle (12) teilen.

9. Verfahren nach einem der vorhergehenden Ansprüche, **dadurch gekennzeichnet, dass** zusätzlich eine Innenwandung zumindest eines Schraubenkanals (6) entschichtet wird.

10. Verfahren nach Anspruch 9, **dadurch gekennzeichnet, dass** der Laserstrahl (22) während des Entschichtens der Innenwandung eines Schraubenkanals (6) von einem innerhalb des Schraubenkanals (6) angeordneten rotierenden Spiegel (26) auf die Innenwandung gerichtet wird.

11. Entschichtungsstation (10), die zum Entschichten einer mit einer Beschichtung (9) versehenen Oberfläche eines mit Schraubenkanälen (6) und mit einer mittig angeordneten Öffnung versehenen Rads (1) innerhalb eines oder mehrerer zu entschichtender Bereiche (7) eingerichtet ist, die sich ringförmig, insbesondere kreisringförmig um einen der Schraubenkanäle (6) und/oder um die Öffnung (8) erstrecken, wobei die Laserstation (10) eine Laserquelle (12), insbesondere in Form eines CO2-Lasers und Positioniermittel (17), die zur Positionierung des Rads (1) während des Entschichtens ausgelegt sind, aufweist,
**dadurch gekennzeichnet, dass** die Laserstation folgende Merkmale aufweist:
eine sich durch die Entschichtungsstation (10) hindurch erstreckende Fördereinrichtung (15), die mit einer Aussparung 16 versehen ist, eine
Absaugeinrichtung (18), die derart ausgelegt ist, dass sie bzw. ihre Ansaugöffnung ausgehend von einer Grundstellung unterhalb der Fördereinrichtung (15) durch die Aussparung (16) in einer Z-Richtung rückseitig unmittelbar benachbart zu einer Radschüssel (2) des durch die Positioniermittel (17) gehaltenen Rads (1) positionierbar sowie in X- und Y-Richtung bewegbar ist, um die Absaugeinrichtung (7) bzw. ihre Ansaugöffnung direkt unterhalb des jeweiligen Schraubenkanals (6) oder der mittigen Öffnung (8) des Rads anordnen zu können, und eine Scanner-Einrichtung (13), über die ein von der Laserquelle (12) generierter Laserstrahl auf einen zu entschichtenden Bereich gerichtet wird, wobei sich an die Scanner-Einrichtung (13) kein Strahltubus anschließt.

12. Entschichtungsstation (10) nach Anspruch 11, **dadurch gekennzeichnet, dass** eine Strahlumlenkeinrichtung (23) vorgesehen ist, die derart ausgebildet ist und an der Scanner-Einrichtung (13) angeordnet werden kann, dass der von der Scanner-Einrichtung (13) ausgesendete Laserstrahl (22) in einem um eine feste Drehachse rotierenden Winkel abgelenkt wird, wobei der Winkel insbesondere im Bereich zwischen 80 und 100° liegt und bevorzugt 90° beträgt.

13. Entschichtungsstation (10) nach Anspruch 12, **dadurch gekennzeichnet, dass** die Strahlumlenkeinrichtung (23) einen Spiegel (26) aufweist, der an einem freien Ende eines Rohrs (25) befestigt ist, das über eine Antriebseinheit (24) drehend um seine Rohrachse antreibbar ist.

## Claims

1. Method for decoating a surface, which is provided with a coating (9), of a wheel (1) provided with screw channels (6) and with a centrally arranged opening (8) within a plurality of regions (7) to be stripped which extend annularly, in particular circularly, around one of the screw channels (6) and/or around the central opening (8), the method being carried out using a laser beam (22) generated by a laser source (12), **characterized in that** the method comprises the following steps:
**a)** Positioning of a suction opening of a suction device (18) upwards in the Z-direction and below that screw channel (6) or central opening (8) which is surrounded by the region to be decoated,
**b)** Decoating the region (7) to be decoated by moving the laser beam over the region (7) to be decoated without limiting the region (7) to be decoated by additional means, wherein gases and particles generated during the decoating are directly sucked off through that screw channel (6) or through the central opening (8) below which the suction opening was positioned in step a), and
**c)** Repeating steps a) and b) to decoat each further region to be decoated.

2. Method according to claim 1, **characterized in that** the laser beam is moved over the region or regions (7) of the surface to be decoated by means of a scanner device (13), in particular a moveable scanner device.

3. Method according to any of the preceding claims, **characterized in that** a CO₂ laser is used as laser source (12), the laser beam generated lying in particular in the wavelength range from 9 to 11 µm.

4. Method according to claim 3, **characterized in that** the CO₂ laser is operated in cw-mode.

5. Method according to claim 1 or 2, **characterized in that** a fiber laser or an Nd:Yag-laser is used as laser source (12) in cw-mode or in pulsed mode, the generated laser beam lying in particular in the wavelength range from 1 to 1.1 µm.

6. Method according to any of the preceding claims, **characterized in that** the wheel (1) is fixed, the position of its screw channels (6) and/or its opening are automatically detected, the region or regions (7) to be decoated are automatically defined based on the detected positions and the laser beam is moved accordingly, the fixing of the wheel (1) being carried out in particular by bringing about a centering thereof.

7. Method according to any of the preceding claims, **characterized in that** the laser beam is moved in a spiral over the region or regions (7) to be decoated.

8. Method according to any of the preceding claims, **characterized in that** at least two decoating stations (10) are provided for carrying out the method, which share a single laser source (12).

9. Method according to any of the preceding claims, **characterized in that** additionally an inner wall of at least one screw channel (6) is decoated.

10. Method according to claim 9, **characterized in that** the laser beam (22) is directed onto the inner wall of a screw channel (6) by a rotating mirror (26) arranged inside the screw channel (6) during the decoating of the inner wall.

11. Decoating station (10), which is set up for decoating a surface, that is provided with a coating (9), of a wheel (1) provided with screw channels (6) and with a centrally arranged opening within one or more regions (7) do be decoated which extend annularly, in particular circularly, around one of the screw channels and/or around the central opening (8), the laser station (10) having a laser source, in particular in the form of a CO₂-laser, and positioning means (17) which are designed for positioning the wheel (1) during the decoating process, **characterized in that** the laser station comprises the following features:
Conveyor means (15) extending through the decoating station (10) and provided with a recess (16), a suction device (18) which is designed in such a way that, starting from a basic position in a Z-direction, it or its suction opening can be positioned at the rear directly adjacent to a wheel disc (2) of the wheel (1) held by the positioning means (17) and can be moved in the X- and Y-directions in order to position the suction device (7) or its suction opening directly underneath the respective wheel (1), and a scanner device (13) via which a laser beam generated by the laser source (12) is directed onto a region to be decoated, no beam tube being connected to the scanner device (13).

12. Decoating station (10) according to claim 11, **characterized in that** a beam deflection device (23) is provided which is designed and can be arranged on the scanner device (13) in such a way that the laser beam (22) emitted by the scanner device (13) is deflected at an angle rotating a fixed axis of rotation, the angle lying in particular in the range between 80° and 100° and preferably being 90°.

13. Decoating station (10) according to claim 12, **characterized in that** the beam deflection device (23) comprises a mirror (26) which is fixed to a free end of a tube (25) that is rotatably drivable about its tube axis via a drive unit (24).

## Revendications

1. Procédé pour décaper une surface, qui est pourvue d'une revêtement (9), d'une roue (1) munie de canaux de vissage (6) et d'une ouverture centrale (8) à l'intérieur de plusieurs zones à décaper (7) qui s'étendent de manière annulaire, en particulier circulaire, autour de l'un des canaux de vissage (6) et/ou autour de l'ouverture centrale (8), le procédé étant réalisé en utilisant un faisceau laser (22) généré par une source laser (12), **caractérisé en ce que** le procédé présente les étapes suivantes:
**a)** Positionner une ouverture d'aspiration d'un dispositif d'aspiration (18) vers le haut dans la direction Z et sous le canal de vissage (6) ou l'ouverture centrale (8) qui est entouré par la zone (7) à décaper,
**b)** Décapage de la zone (7) à décaper en déplaçant le faisceau laser sur la zone (7) à décaper sans limiter la zone (7) à décaper par des moyens supplémentaires, les gaz et les particules générés pendant le décapage étant directement aspirés par le canal à vissage (6) ou par l'ouverture centrale (8) sous laquelle l'ouverture d'aspiration a été positionnée à l'étape a), et
**c)** Répéter les étapes a) et b) pour décaper chaque autre zone à décaper.

2. Procédé selon la revendication 1, **caractérisé en ce que** le faisceau laser est déplacé sur la ou les zones (7) de la surface à décaper au moyen d'un dispositif de balayage (13), en particulier un dispositif de balayage mobile.

3. Procédé selon l'une des revendications précédentes, **caractérisé en ce que** l'on utilise comme source laser (12) un laser CO₂, le faisceau laser généré se situant en particulier dans la plage de longueur d'onde de 9 à 11 µm.

4. Procédé selon la revendication 3, **caractérisée en ce que** le laser CO₂ fonctionne en mode cw.

5. Procédé selon la revendication 1 ou 2, **caractérisé en ce qu'**un laser à fibre ou un laser Nd:Yag est utilisé comme source laser (12) en mode cw ou en mode pulsé, le faisceau laser généré se situant en particulier dans la plage de longueur d'onde de 1 à 1,1 µm.

6. Procédé selon l'une des revendications précédentes, **caractérisé en ce qu'**on fixe la roue (1), on détecte automatiquement les positions de ses canaux de vissage (6) et/ou son ouverture, on définit automatiquement la ou les zones (7) à décaper à partir des positions détectées et on déplace le faisceau laser en conséquence, la fixation de la roue (1) étant réalisée notamment en provoquant un centrage de celle-ci.

7. Procédé selon l'une des revendications précédentes, **caractérisé en ce que** le faisceau laser est déplacé en spirale sur la ou les zones (7) à décaper.

8. Procédé selon l'une des revendications précédentes, **caractérisé en ce qu'il** est prévu pour la mise en oeuvre du procédé au moins deux postes de décapage (10) qui partagent une seule source laser (12).

9. Procédé selon l'une des revendications précédentes, **caractérisé en ce que** l'on décape en outre une paroi intérieure d'au moins un canal de vissage (6).

10. Procédé selon la revendication 9, **caractérisé en ce que** pendant le décapage de la paroi intérieure d'un canal de vissage (6), le faisceau laser (22) est dirigé sur la paroi intérieure par un miroir rotatif (26) disposé à l'intérieur du canal de vis (6).

11. Station de décapage (10) qui est aménagé pour décaper une surface, qui est pourvue d'une revêtement (9), d'une roue (1) munie de canaux de vissage (6) et d'une ouverture disposée centralement à l'intérieur d'une ou plusieurs zones (7) à décaper et qui s'étendent de manière annulaire, en particulier circulaire autour de l'un des canaux de vissage (6) et/ou autour de l'ouverture centrale (8), la station laser (10) présentant une source laser, en particulier sous la forme d'un laser CO₂, et des moyens de positionnement (17) qui sont conçus pour positionner la roue (1) pendant le processus de décapage, **caractérisée en ce que** la station laser présente les caractéristiques suivantes :
un dispositif de convoyeur (15) s'étendant à travers la station de décapage (10) et pourvu d'un évidement (16), un dispositif d'aspiration (18) qui est conçu de telle sorte que, en partant d'une position de base dans une direction Z, il ou son ouverture d'aspiration peut être positionné(e) à l'arrière directement à côté d'une cuvette de roue (2) de la roue (1) maintenue par les moyens de positionnement (17) et peut être déplacé(e) dans les directions X et Y afin de positionner le dispositif d'aspiration (7) ou son ouverture d'aspiration directement en dessous du canal de vissage respectif (6) ou de l'ouverture centrale (8) de la roue, et un dispositif de balayage (13) par lequel un faisceau laser généré par la source laser (12) est dirigé sur une zone à décaper, aucun tube de faisceau n'étant relié au dispositif de balayage (13).

12. Station de décapage (10) selon la revendication 11, **caractérisée en ce qu'**il est prévu un dispositif de déviation de faisceau (23) qui est conçu et peut être disposé sur le dispositif de balayage (13) de telle sorte que le faisceau laser (22) émis par le dispositif de balayage (13) est dévié selon un angle tournant autour d'un axe de rotation fixe, l'angle étant notamment compris entre 80 et 100° et étant de préférence de 90°.

13. Station de décapage (10) selon la revendication 12, **caractérisée en ce que** le dispositif de déviation de faisceau (23) comprend un miroir (26) qui est fixé à une extrémité libre d'un tube (25) qui peut être entraîné en rotation autour de son axe de tube par une unité d'entraînement (24).
